# EUROPEAN PATENT SPECIFICATION

(11) **EP 3 997 168 B1**
(45) Date of publication and mention of the grant of the patent: **06.09.2023**
(21) Application number: 20737448.9
(22) Date of filing: 08.07.2020
(51) Int. Cl.: C08K 9/04, C08K 3/34, C09D 7/43, C09D 7/62

(54) **SYNERGISTIC COMPOSITION**
SYNERGISTISCHE ZUSAMMENSETZUNG
COMPOSITION SYNERGIQUE

(30) Priority: 12.07.2019 EP 19186162
(43) Date of publication of application: 18.05.2022
(73) Proprietor: BYK-Chemie GmbH, 46483 Wesel (DE)
(72) Inventor: CHAJDA, Dominika Beata, 46483 Wesel (DE); NAGELSDIEK, René, 46483 Wesel (DE); BÜHNE, Sylvia, 46483 Wesel (DE); DZIWOK, Klaus, 46483 Wesel (DE); HOLTKAMP, Heribert, 46483 Wesel (DE); VERLINDEN, Christoph, 46483 Wesel (DE)
(74) Representative: Altana IP Department
(86) International application number: PCT/EP2020/069192
(87) International publication number: WO 2021/008954

(56) References cited:
- US-A- 5 939 475
- US-A1- 2002 002 230

## Description

The invention relates to a composition comprising an organically modified silicate and an organic compound, a process of preparing the composition and the use of the composition for controlling the rheology of a non-aqueous liquid composition.

In the field of coating materials, adhesives, sealants, and molding compounds, as well as non-aqueous based oil-drilling fluids and the like, it is necessary to customize the rheological properties of such liquid systems, primarily through adjusting the viscosity. This can be done by the selection of binding agents, solvents and the concentration of pigments and/or fillers. Often, the addition of so-called rheology additives to these liquids is required. The effect of these additives lays in adjusting the rheological properties of the system, like the viscosity and the viscoelastic properties. By doing so, the system properties are usually improved with respect to sag resistance, improved storage stability (due to reduced settling of solid particles), or a general increase in viscosity, often referred to as "thickening".

Typical rheology additives for non-aqueous systems include, in addition to organic thickeners such as amides or urea based thickeners, inorganic thickeners such as, for example layered silicates. Among layered silicates, clay materials are often used as thickeners; among these, organically modified clay materials (also known as organoclays) are used in the art. Organoclays are widely used as thickeners for organic solvents or organic coating systems like paints and varnishes and in composites as well. Beside improvement of the storage stability of the organic systems by preventing the demixing and sedimentation of pigments and fillers in the system, a further purpose is to increase the sag resistance of liquid organic systems. Usually, organoclays are made from natural or synthetic clays, typically representing the reaction product of a clay with a modification agent, for example a higher alkyl containing ammonium compound, rendering the hydrophilic clay hydrophobic. This leads to an improved compatibility with organic materials. The use of such modified clays as rheology additives is described for example in WO 97/17398 and US 6,036,765. Organically modified silica is commonly prepared by treating silica with organic compounds, such as organoalkoxysilanes, hexamethyldisilazane, chlorosilanes, carboxylic acids, and the like. As with organoclays, the organic treatment of the silica results in an improved compatibility with organic materials.

Those rheology additives need to comply with a multiplicity of requirements. They have to show not only an improved rheological activity in the application system, but also a broad compatibility in application-relevant formulations as well. There is still an ongoing need to provide improved rheology additives. Using the improved rheology additive should lead to very reliable and increased thickening effects in various non-aqueous formulations.

Thus, it is a particular object of the present invention to provide a high-quality rheology control agent of good effectiveness, which is employable in numerous application systems. More particularly the intention was to find rheology control agents resulting in a pronounced anti-sag behavior. Particularly, a high layer thickness of applied liquid compositions (such as coatings, gelcoats, adhesives or sealants) should result without sagging.

Surprisingly it has been found that these objectives can be achieved by a composition comprising i) an organically modified silicate, and ii) an organic compound having at least one non-primary amine group and at least three hydroxyl groups, wherein at least two of said hydroxyl groups have an amino group in beta position of the hydroxyl group, and wherein said at least two hydroxyl groups having an amino group in beta position of the hydroxyl group are separated by at least 6 carbon atoms, and wherein at least a part of the hydroxyl groups of the organic compound are secondary hydroxyl groups. Not only does the composition comprising the organically modified silicate and the organic compound according to the invention lead to an improved rheological behavior, but unexpectedly a synergism between those two components is showing, which led to an even better result in terms of anti-sag-behavior.

Generally, the organically modified silicate is selected from the group consisting of organically modified clays, organically modified silica and mixtures thereof. Preferably, the organically modified silicate is an organically modified clay.

Suitably, the composition comprises a mixture of at least two different types of clay. Suitable examples are mixtures of hormite clays (e.g. sepiolite, palygorskite) and smectite clays. Most suitable are mixtures of sepiolite clays and smectite clays. Both sepiolite and palygorskite are included in the phyllosilicates because they contain a continuous two-dimensional sheet of SiO4 tetrahedrals but they differ from the other layer silicates in lacking continuous octahedral sheets. Sepiolites and palygorskites show a needle shape structure, whereas the smectite clays show a platelet shape structure. Of the two mentioned hormite clays, sepiolite is preferred for use in the invention. The smectite is preferably a natural or synthetic clay mineral selected from the group consisting of hectorite, montmorillonite, bentonite, beidelite, saponite, stevensite, and mixtures thereof. A particularly preferred choice of the smectite is hectorite, montmorillonite, and saponite.

Generally, the component i) is a silicate, which has been modified with an organic ammonium salt having one or more hydrocarbon chains linked to the ammonium group having at least 10 carbon atoms per hydrocarbon chain. Suitably, the hydrocarbon chain linked to the ammonium group has at least 14, more suitably at least 16 carbon atoms.

Preferably, the organic ammonium salt is a quaternary ammonium salt. The quaternary ammonium salts employed for treating the mineral clay mixtures typically comprise alkyl and/or arylalkyl quaternary ammonium salts containing the same or different straight- and/or branched-chain saturated and/or unsaturated alkyl groups of 1 to 30 carbon atoms and the anion is selected from the group consisting of chloride, bromide, methylsulfate, nitrate, hydroxide, acetate, phosphate and mixtures thereof, preferably chloride, bromide and methylsulfate. Preferred choices of the quaternary ammonium salts are dimethyl di(hydrogenated tallow) ammonium chloride, methylbenzyl di(hydrogenated tallow) ammonium chloride, dimethylbenzyl hydrogenated tallow ammonium chloride, dimethyl hydrogenated tallow-2-ethylhexylammonium methylsulfate and mixtures of two or more of the preferred choices. Instead of the quaternary ammonium salts comprising hydrogenated tallow groups, similar products originating from vegetable or synthetic sources can be used. The mineral clay mixture is typically treated with 5 to 150 meq., preferably with 5 to 80 meq. of the quaternary ammonium salt per 100 g of the mixture. Where the organoclay is used in high temperature drilling fluids a more preferred range is 5 to 50 meq., and even more optimal, 10 to 35 meq of the quaternary ammonium salt per 100 g of the mixture. For many other thixotropic applications a range of about 25 to 80 meq., and preferably 35 to 65 meq., of the quaternary ammonium salt is used per 100 g of the clay mixture.

In another embodiment, the quaternary ammonium salts employed for treating the mineral clay mixtures comprise so called esterquat quaternary ammonium salts in which the quaternary ammonium group is attached to at least one hydrocarbyl group via an ester bond. For the counterion (anion) of the esterquat and the amount of esterquat per clay, the same applies as mentioned before for the clay mixtures treated with alkyl quaternary ammonium salts. Examples of these kind of organoclays can be found in US 5718841 A and EP 798267 B1.

Suitably, the composition comprises 50 to 97 % by weight of the organically modified silicate i), more suitably 60 to 95 % by weight and most suitably 65 to 92 % by weight, calculated on the weight of the components i) and ii).

Preferably, the proportion of primary amine groups in the organic compound ii) is in the range of 0.0 and 8.0 mol-% of the total amount of amine groups. More preferably, the proportion of primary amine groups in the organic compound ii) is in the range of 0.0 and 5.0 mol-% and most preferably in the range of 0.0 and 2.0 mol-% of the total amount of amine groups. In one embodiment, the organic compound ii) does not contain primary amine groups. The proportion of primary amine groups is determined by potentiometric titration with 2.5 N acetyl acetone solution in pyridine; excess acetyl acetone is determined by titration with 0.5 N KOH in ethanol.

Generally, the organic compound ii) is the reaction product of at least a compound having at least two epoxide groups and a primary or secondary amine having at least one hydroxyl group. Suitably, the amine is a primary amine having at least one hydroxyl group or a secondary amine having at least two hydroxyl groups, as well as mixtures thereof. In some embodiments, the compound having at least two epoxide groups may additionally be reacted with amines containing no hydroxyl groups.

The reaction of an epoxide having one CH₂ group in its oxirane ring with a primary or secondary amine generally leads to a mixture of primary and secondary hydroxyl groups via the ring opening of the oxirane ring. This process leads to the conversion of primary amine groups to secondary amine groups and the conversion of secondary amine groups to tertiary amine groups with the concurrent forming of hydroxyl groups. Therefore, reacting a compound having at least two epoxide groups with an amine results in the formation of at least two new hydroxyl groups, plus additional hydroxyl groups the amine and/or the compound having at least two epoxide groups may possess beforehand. Furthermore, the reaction of a compound having at least two epoxide groups and amine groups leads to hydroxyl groups having an amino group in beta position of the hydroxyl group. It is preferred that at least a part of the primary amine groups is reacted with two epoxide groups of two compounds having at least two epoxide groups each resulting in compounds with a higher molecular weight.

The synthesis of the organic compound ii) may generally be carried out in the presence of the organically modified silicate i). The synthesis may be performed in a batch or semibatch reactor, but it is preferred that the synthesis is carried out in an extruder reactor or kneader.

Generally, epichlorohydrin is reacted with diols to obtain an epoxide resin. Preferably, the diol is a cyclic or linear diol, more preferably an aromatic diol. Suitable diols for the production of an epoxide resin are listed below.

The organic compound ii) is preferably present in an amount of 5 to 100, preferably 10 to 50 % by weight, calculated on the weight of the organically modified silicate i). More preferably, the organic compound ii) is present in an amount of 12 to 40 % by weight, calculated on the weight of the organically modified silicate i). Even more preferably, the organic compound ii) is present in an amount of 15 to 30 % by weight, calculated on the weight of the organically modified silicate i).

Suitably, the organic compound has at least 2 non-primary amine groups and at least 4 hydroxyl groups. Of those hydroxyl groups, at least 2 hydroxyl groups have an amino group in beta position. Preferably, the organic compound has at least 2 non-primary amine groups and at least 6 hydroxyl groups. More preferably, the organic compound has at least 3 non-primary amine groups and at least 6 hydroxyl groups. Even more preferably, the organic compound has at least 4 non-primary amine groups and at least 8 hydroxyl groups. Most preferably, the organic compound has at least 4 non-primary amine groups and at least 10 hydroxyl groups.

It is furthermore preferred that at least 3 hydroxyl groups of the organic compound have an amino group in beta position. It is more preferred that at least 4 hydroxyl groups of the organic compound have an amino group in beta position. It is even more preferred that at least 6 hydroxyl groups of the organic compound have an amino group in beta position. It is most preferred that at least 8 hydroxyl groups of the organic compound have an amino group in beta position.

According to the invention, said at least two hydroxyl groups having an amino group in beta position of the hydroxyl group are separated by at least 6 carbon atoms. Generally, other elements than carbon may also be present in between the at least two hydroxyl groups. These additional atom types do not have an influence on the number of carbon atoms.

Preferably, the at least two hydroxyl groups which have an amino group in beta position of the hydroxyl group are separated by at least 8 carbon atoms, more suitably by at least 10 carbon atoms. Preferably, at least 2 of the hydroxyl groups of the organic compound are secondary hydroxyl groups. More preferably, at least 4 of the hydroxyl groups of the organic compound are secondary hydroxyl groups. Most preferably, at least 5 of the hydroxyl groups of the organic compound are secondary hydroxyl groups.

Generally, the organic compound ii) has an amine value in the range of 10 to 120 mg KOH/g. Preferably, the amine value of the organic compound ii) is in the range of 15 to 100 mg KOH/g, more preferably in the range of 20 to 95 mg KOH/g and most preferably in the range of 25 to 90 mg KOH/g. The amine value is the amount KOH in mg which corresponds to the amine content of 1 g of substance. The amine values were determined according to DIN 16945 by potentiometric titration with 0.1 N perchloric acid in acetic acid. Amine values may be calculated based on raw materials used or determined by titration.

The organic compound ii) of the composition may generally have a number average molecular weight in the range of 350 to 25000 g/mol. Preferably, the number average molecular weight of the organic compound ii) is in the range of 500 to 20000 g/mol, more preferably in the range of 800 to 17000 g/mol and most preferably in the range of 1200 to 15000 g/mol. The number and weight average molecular weight can be determined by gel permeation chromatography (eluent: solution of lithium bromide (content 5 g/l) in dimethylacetamide, standard: polymethylmethacrylate, column temperature: 50°C) according to DIN 55672 part 2 (year: 2016). The number average molecular weight may also be determined by calculation. Additionally, the number average molecular weight for small molecules up to 1000 g/mol may be determined by other methods such as mass spectroscopy or nuclear magnetic resonance spectroscopy. The polydispersity D is calculated by dividing the weight average molecular weight M_{w} by the number average molecular weight Mₙ.

Furthermore, the invention relates to the use of the organic compound ii) to increase the rheological effectiveness of the organically modified silicate i), which leads to an enhanced thickening effect.

Suitably, the composition is a solid at 23°C and 100 kPa. In a different embodiment, the composition is a liquid at 23°C and 100 kPa.

The invention also relates to a non-aqueous liquid composition comprising the composition according to the invention. The term "liquid composition" denotes a composition, i.e. a matter of at least two substances, being liquid at 23° C and 100 kPa. Within the current invention, the term liquid refers to any liquid medium, independent of its viscosity. Liquids therefore comprise very low viscous media as well as high viscous media, such as paste materials. Examples of suitable non-aqueous liquid compositions are: a coating composition, a plastic formulation, a pigment paste, a polymer formulation, a sealant formulation, a cosmetic formulation, a homecare or industrial care formulation (including perfume and fragrance formulations), a ceramic formulation, a flooring formulation, an adhesive formulation, a liquid formulation for use in gas and oil production, a composition for the manufacture of electrical components and circuits, a liquid formulation for use in energy storage media, a cleaning agent, a potting compound, a building material formulation, a lubricant, a filling compound, a wax emulsion, a metalworking fluid, a metal-processing product, a liquid composition in the form of a spraying agent, a so-called deposition aid (e.g., for use in plant protection agents or for the general purpose of drift reduction), an ink, and mixtures thereof.

Further liquid compositions wherein the composition according to the present invention can be used are solvent-based or solvent-free paints (such as marine and protective coatings, automotive coatings, general industrial coatings, can and coil coatings, powder coatings), printing inks and inks and lacquers as e.g. lacquers for varnishing of plastics, wire enamels, floor coatings, coating compositions for coating foodstuffs and seeds, and as so-called color resists, which are used for color filters, for example in flat panel displays such as liquid-crystal displays. The field of application lacquers also includes pasty materials which generally have a very high proportion of solids and a small proportion of liquid components, for example so-called pigment pastes or also pastes based on effect pigments, for example metal effect pigments such as, for example, aluminum pigments, silver pigments, brass pigments, zinc pigments, copper pigments, bronze pigments such as gold bronzes, fire-dyed bronzes or iron oxide aluminum pigments. The effect pigments also include, for example, interference pigments or pearlescent pigments such as, for example, metal oxide mica pigments, fishsilver, bismuth oxide chloride or basic lead carbonate.

The plastic formulations can be liquid or non-liquid starting materials to produce plastic materials, which are preferably converted into a duromer by a chemical cross-linking process ("curing").

The cosmetic preparations can be various liquid compositions, which are used in the so called personal care or healthcare sector, e.g. lotions, creams, pastes such as, for example, toothpaste, foams such as, for example, shaving foam, gels such as, for example, shaving gels, shower gels or active ingredients in gel formulations, hair shampoos, liquid soaps, nail varnishes, lipsticks and hair dyes. The so-called wax emulsions are preferably dispersions of solid waxes in particulate form at room temperature in an organic medium. The building material formulations may be liquid or paste-like materials, which are used in the construction sector and solidify after curing. The metal working fluids may be cutting liquids, drilling fluids (such as are used in metal processing), or forging fluids or lubricants in general. Potential other areas are release agents (for example, aluminum die casting and foundry applications), foundry washes (foundry coatings) and liquids for the surface treatment of metals.

The lubricants are means, which are used for lubrication, that is to say, which serve to reduce friction and wear, as well as to provide power, cooling, vibration dampening, sealing action and corrosion protection. Cleaning agents can be used to clean a wide range of objects, for example in the area of homecare or industrial care. They effect or assist the removal of impurities, residues and attachments. The cleaners also include detergents (primarily for cleaning textiles, their precursors, leather, and dish), and personal care products. Formulations containing perfumes and other fragrances (either as liquid raw materials or in encapsulated form), e.g., as perfume gels, also belong to this area of application.

The adhesives can be all adhesive materials which are liquid under processing conditions and which can join parts by surface adhesion and internal strength. The sealants (including caulks) can be all materials which are liquid under processing conditions and which can work as a mechanical seal, preferably to block the passage of fluids, gases, or particles (e.g., dust), as well as the transmission of sound and/or temperature through surface, joints or openings in materials.

Liquid formulations used for gas and oil production are formulations used to develop and exploit a deposit. Drilling fluids or "drilling muds" are preferred examples. Another application example are liquids used to prepare or perform a hydraulic fracturing process.

The non-aqueous liquid composition of the invention may further comprise customary additives. Examples of additives are antiblocking agents, stabilizers, antioxidants, pigments, wetting agents, dispersants, emulsifiers, additional rheology additives, UV absorbers, free-radical scavengers, slip additives, defoamers, adhesion promoters, leveling agents, waxes, nanoparticles, film-forming auxiliaries, and flame retardants. Preferred additives are wetting agents, dispersants and/or emulsifiers and rheology additives, which are different from the composition of the present invention.

Generally, the non-aqueous liquid composition is essentially free from water. That denotes a composition suitably comprising between 0.0 and less than 15.0 %, preferably less than 10.0 % by weight of water, more preferably between 0.0 and 7.0 % by weight of water, calculated on the total weight of the non-aqueous liquid composition. More preferably, the non-aqueous liquid composition comprises less than 5.0 % by weight of water. For example, the non-aqueous liquid composition comprises less than 3.0 % by weight or less than 1.0% by weight of water, calculated on the total weight of the non-aqueous liquid composition.

The non-aqueous liquid composition may suitably further comprise an organic resin. The organic resin is different from the organic compound ii). Apart from that, the organic resin may be any of those known in the prior art, preferably those which crosslink during a curing process. A crosslinking can take place by means of polyaddition, polycondensation, or polymerization reactions. Preferred curing processes are selected from radical or ionic polymerization reactions and polyaddition reactions. In a different embodiment, the non-aqueous liquid composition does not comprise an organic resin. Preferably, the non-aqueous liquid composition comprises an organic resin, which is selected from the group of epoxy resins, isocyanate systems, silyl modified polymers and unsaturated polyester resins. Particularly preferred are 1 pack and 2 pack isocyanate systems as well as 1 pack and 2 pack epoxy resins. Amongst those, 1 and 2 pack epoxy resins are a very preferred.

Commonly used epoxy resins are formed by reacting reactive phenols, alcohols, acids and/or amines with epichlorohydrin. Alternatively, epoxy resins can be prepared by epoxidation reaction of compounds comprising olefinic double bonds. Preferably the epoxy resins used in the present invention are selected from the group consisting of glycidyl ethers, like bisphenol A diglycidyl ether, bisphenol F diglycidyl ether, hydrogenated bisphenol A diglycidyl ether, hydrogenated bisphenol F diglycidyl ether, oligomeric and polymeric diglycidylethers based on bisphenol A and/or Bisphenol F and/or hydrogenated bisphenol A and/or hydrogenated Bisphenol F, epoxide novolak, epoxide o-cresol novolak, epoxydized polybutadiene, epoxydized vegetable oils (like epoxydized soy bean oil or linseed oil), (co)polymers of ethylenically unsaturated monomers comprising at least one epoxy group (such as glycidylmethacrylate), 1,3-propane-, 1,4-butane- or 1,6-hexane-diglycidyl ether and polyalkylenoxide glycidyl ether; glycidyl esters, like hexahydrophthalic acid diglycidyl ester; glycidyl amines, like diglycidyl anilin or tetraglycidylmethylene dianiline; cycloaliphatic epoxides, like 3,4-epoxycyclohexyl-epoxyethane or 3,4-epoxycyclohexylmethyl-3,4-epoxy-cyclohexane carboxylate; and glycidyl isocyanurates, like trisglycidyl isocyanurate. Further epoxy resins which may be used in the liquid compositions of the present invention are for example described in EP 2 085 426 A1, EP 1 141 071 A1, US 5212261 A, US 3391113 A, or US 4623701. Preferred examples of epoxy resins are those based on bisphenol A, bisphenol F, or cycloaliphatic diols and epichlorohydrin, having a molecular weight between 300 and 5000 g/mol; therefore, liquid as well as solid epoxy resins can be used in preferred embodiments. Epoxy resins can also be chemically modified, e.g., by esterification of OH groups with carboxylic acids (like fatty acids). Preferably for use as baking enamels, epoxy resins can also be combined with other kinds of resins such as phenolic, melamin, urea and benzoguanamin resins. The crosslinking of these epoxy resins is usually carried out by means of hardeners containing amine groups or acid anhydride groups, optionally in the presence of curing accelerators (catalysts).

It is well-known in the art that epoxy resins can be delivered as 1 pack or 2 pack solutions: A 2 pack system is characterized by the fact that the epoxy resin and the hardener are supplied as two separate compounds to be mixed during the actual application processing step. In contrast, the 1 pack system comprises both resin and hardener in a one component delivery form. In the latter case, a premature reaction between resin and hardener is prevented by chemically reversibly protecting reactive groups in the combined supply form.

Epoxide hardeners are typically di- or polyfunctional compounds or polymers, the functional groups of which are apt to react with oxirane groups. Preferably, the epoxide hardeners which are suitable in the present invention are selected from the group consisting of diamines and polyamines (preferably aliphatic and cycloaliphatic and aromatic diamines and polyamines), amine functional heterocycles (like aminoalkylpiperazines), phenalkamines, and polyamides such as polyaminoamides (preferably of oligomerized fatty acids). In the case of 1 pack epoxy systems, suitable hardeners can preferably be selected from ketimines , carboxylic acids , carbonic acid , ureidoamines, dicyandiamide and its derivatives, compounds containing terminal acyl-ethyleneurea groups, as well as addition products of amines reacted with polyacrylate functional resins (Aza-Michael adducts). Particularly preferred are diamines, polyamines and polyamides as well as their combination. Even more preferred as epoxide hardeners are diamines and polyamines.

Particularly preferred diamines and polyamines can be selected from the group of aliphatic diamines and aliphatic polyamines, like diethylene triamine, triethylene tetramine or 3,3',5-trimethylhexamethylene diamine; cycloaliphatic amines, like 1,2- cyclohexyl diamine, isophorone diamine and its mixture of isomers or m-xylylen diamine; aromatic amines, like methylene dianiline or 4,4-diamino diphenyl sulfone; modified amines, like Mannich bases (e. g. diethylene triamine-phenol-Mannich base). Particularly preferred hardeners of the polyamide type are polyaminoamides and dicyan diamide. Typical representatives of cyclic carboxylic acid anhydride type hardeners being used in thermoset epoxy resins are e. g. phthalic anhydride or hexahydrophthalic anhydride.

Isocyanate systems are such which cure under participation of isocyanate groups, preferably by forming urethane bonds, but also by forming urea bonds. Therefore, in these systems polyisocyanate compounds are used to cure polyhydroxy or polyamino functional materials, optionally in the presence of curing catalysts. Moreover, a crosslinking can also proceed under the reaction of the isocyanate groups amongst each other. Preferably, isocyanate systems are 1 pack or 2 pack polyol/polyisocyanate-based systems. In the case of 2 pack isocyanate systems, as a reactive mixture, polyol and the polyisocyanate form the base of the system. As described for epoxy resins, a 1 pack isocyanate system comprises both resin and hardener in a one component delivery form with reactive groups being blocked.

Suitable polyols are in principle all polyhydroxy-functional compounds which comprise at least two hydroxyl groups. Particularly suitable polyols are polyester polyols, poly(meth)acrylate polyols and polyether polyols, although monomeric polyols with molecular uniformity can also be used. Polyester polyols can be obtained by reaction of polycarboxylic acids and their reactive derivatives such as their anhydrides and halides with an excess of preferably monomeric polyols. Examples of monomeric polyols are ethylene glycol, diethylene glycol, triethylene glycol, dipropylene glycol, butanediol, glycerol, trimethylolpropane, pentaerythritol, and the like. Dicarboxylic acids used are frequently adipic acid and phthalic acids, including hydrogenated phthalic acids, and also their anhydrides. Polyester polyols are also obtainable, however, by ring-opening polymerization of lactones with preferably monomeric polyols. Examples of suitable lactones are butyrolactone, caprolactone, and valerolactone. Polyether polyols are obtained preferably by addition reaction of alkylene oxides, preferably ethylene oxide and/or propylene oxide with preferably monomeric polyols. Poly(meth)acrylate polyols are obtained preferably by copolymerization of hydroxyfunctional (meth)acrylates or (meth)acrylamides with further ethylenically-unsaturated monomers. In principle for the purposes of the present invention, it is possible as well to use all polyols obtainable via the aforementioned methods.

Suitable polyisocyanates are in principle all species having two or more isocyanate groups. In principle it is possible to subdivide the poly-isocyanates into aromatic polyisocyanates, more particularly aromatic diisocyanates such as, for example, 2,4- and 2,6-tolylenediisocyanate (TDI), 1,5-naphthylenediisocyanate, 1,3- and 1,4-phenylene-diisocyanate, 4,4'-diphenyldimethylmethanediisocyanate, 4,4'-diphenylethanediisocyanate, or 2,2'-, 2,4'- and 4,4'-diphenyl-methanediisocyanate (MDI) or other di- and tetraalkyl-diphenylmethanediisocyanates; cycloaliphatic poly-isocyanates, more particularly cycloaliphatic diisocyanates such as, for example, 2,2'-, 2,4'- and 4,4'-dicyclohexyl-methanediisocyanate (H₁₂MDI), isophoronediisocyanate (IPDI), cyclohexane 1,4-diisocyanate, or 2,4- and 2,6-methylcyclohexyldiisocyanate (HTDI); araliphatic polyisocyanates, more particularly araliphatic diisocyanates such as, for example, xylylene-diisocyanate (XDI), bisisocyanatoethyl phthalate, or m- and p-tetramethylxylylenediisocyanate (TMXDI); and aliphatic polyisocyanates, more particularly aliphatic diisocyanates such as, for example, hexamethylene-diisocyanate (HDI), ethylenediisocyanate, tetra-methylenediisocyanate, dodecane 1,12-diisocyanate, dimer fatty acid diisocyanate, tetramethoxybutane 1,4-diisocyanate or 2,2,4- and 2,4,4-trimethyl-hexamethylenediisocyanate (TMDI). The polyisocyanates of the abovementioned groups may also be halogen-containing such as chlorine-, bromine- or fluorine-containing, or phosphorus-containing. Examples of such polyisocyanates are 4,4'-diisocyanato-phenylperfluoroethane, 1-chloromethylphenyl-2,4-diisocyanate, 1-bromomethylphenyl-2,6-diisocyanate or 3,3-bischloromethyl-ether-4,4'-diphenyldiisocyanate. It is also possible, however, to use higher-molecular oligomers or polymers of the poly- and diisocyanates, or mixtures of polyisocyanates from one or more of the abovementioned groups.

In the case of 1 pack isocyanate systems, suitable hardeners can preferably be selected from blocked isocyanates, preferably such blocked by H acidic compounds. Preferred examples of blocked isocyantes are such based on dialkyl malonates, 3,5-dimethylpyrazoles, butane oxime (methylethylketoxime), caprolactam, phenols and those based on other alcohols as well as on secondary amines. Another approach to achieve 1 pack isocyanate systems are those in which an excess of isocyanate is used to prepare an isocyanate functional prepolymer.

Unsaturated polyester resins are resin systems that cure via a radical chain reaction of carbon-carbon double bonds. They typically comprise monomers such as unsaturated aromatic compounds to which are bonded one or more ethylenically unsaturated groups, preferably vinyl, substituted vinyl, allyl, (meth)acrylate and (meth)acrylamide groups. The unsaturated polyester resins may be any of those known in the prior art; unsaturated polyester resins also comprise vinyl ester resins (preferably obtainable by reaction of epoxy resins with an unsaturated monocarboxylic acid). Suitable examples are polyesters of dienes such as dicyclopentadiene (DCPD resins) as well as polyesters of dicarboxylic acids and diols having a major amount of olefinic unsaturation, preferably 10 to 75 olefinic groups per 100 ester groups. Typical diols are ethylene glycol and propylene glycol. Typical unsaturated acids include maleic acid, fumaric acid, itaconic acid and phthalic acid which can also be incorporated into the polyester resin starting from the anhydrides, esters or halides of these acids. The curing of unsaturated polyester resins is preferably carried out in the presence of monomers selected from styrene and substituted styrenes (like alphamethylstyrene), allyl benzene, (meth)acrylates, (meth)acrylamides, and olefinic compounds. Optionally, these systems further comprise crosslinkers, such as di(meth)acrylates, di(meth)acrylamides, divinylbenzene, tri(meth)acrylates, tetra(meth)acrylates and so forth.

Unsaturated polyester resin systems can preferably be cured in the presence of initiators (like peroxides or azoinitiators), optionally in the presence of accelerators such as tertiary amines or cobalt compounds (e.g., cobalt octoate or naphthenate). The curing process can be initiated at ambient temperature or at elevated temperatures, optionally by applying pressure to the system, such as in a mold. Moreover, so-called acrylate resin systems ("syrup" systems) in which poly(meth)acrylates are dissolved in the monomers and crosslinkers mentioned above and then cured via a radical process belong to the group of unsaturated polyester systems.

Silyl modified polymers (SMPs, sometimes also referred to as "silyl terminated polymers" or STPs) are prepolymers comprising alkoxysilyl groups. Often, the backbone of these prepolymers comprises polyethers or polyesters. The alkoxysilyl groups can be in terminal positions or lateral positions of the polymer molecule, or a combination of both. When exposed to moisture, the alkoxysilyl groups undergo a condensation reaction forming Si-O-Si groups which leads to a curing of these prepolymers. The background of SMPs is for example described in S. M. Guillaume, "Advances in the synthesis of silyl-modified polymers" (Polym. Chem. 2018, 9, 1911), in M. Roessing, B. Brugger, "Flexible design for adhesives and sealants" (adhesion ADHESIVES & SEALANTS 2/2012, 2), in M. Roessing,

"Novel binders for sealants and adhesives, based on silane- modified polymers with lateral silane groups" (PU MAGAZINE, Vol. 9, No. 4 - AUGUST/SEPTEMBER 2012, 248) and in M. Roessing, B. Brugger, "New polymers with a flexible backbone" (adhesion ADHESIVES & SEALANTS 2/2011, 10).

The non-aqueous liquid composition may suitably comprise
0.10 to 17.00 % by weight of the organically modified silicate i)
0.01 to 17.00 % by weight of the organic compound ii)
66.00 to 99.89 % by weight of binder iii),
calculated on the sum of the weight of components i), ii) and iii). The binder iii) encompasses a resin used, as well as all components able to form covalent bonds with the resin, such as hardeners and reactive diluents.

Preferably, the non-aqueous liquid composition may comprise
0.20 to 14.00 % by weight of the organically modified silicate i)
0.01 to 14.00 % by weight of the organic compound ii)
72.00 to 99.79 % by weight of binder iii),
calculated on the sum of the weight of components i), ii) and iii).

More preferably, the non-aqueous liquid composition may comprise
0.30 to 12.00 % by weight of the organically modified silicate i)
0.01 to 12.00 % by weight of the organic compound ii)
76.00 to 99.69 % by weight of binder iii),
calculated on the sum of the weight of components i), ii) and iii).

In one embodiment, the non-aqueous liquid composition comprises a liquid hydrocarbon or a liquid mixture of hydrocarbons. Non-aqueous liquid compositions comprising hydrocarbons or a liquid mixture of hydrocarbons may for example be used as drilling mud.

The composition is preferably used for controlling the rheology of a non-aqueous liquid composition. Controlling the rheology of said non-aqueous liquid composition means the variation of the viscosity or viscoelastic properties according to the intended use. Generally, the composition is employed to increase the viscosity of the non-aqueous liquid composition, which leads to a thickening effect and an increase in anti-sag behavior.

In a further embodiment, the invention also relates to a process for preparing a composition, comprising the steps of providing an organically modified silicate, providing an organic compound having at least one non-primary amine group and at least three hydroxyl groups, wherein at least two of said hydroxyl groups have an amino group in beta position of the hydroxyl group, and wherein said at least two hydroxyl group having an amino group in beta position of the hydroxyl group are separated by at least 6 carbon atoms, and wherein at least a part of the hydroxyl groups of the organic compound are secondary hydroxyl groups, and mixing components i) and ii). Mixing is combining the compositions and exerting shear force on the combined compounds. The step of mixing the components may be executed according to current processes known by the person skilled in the art. This may involve mixing by manual or electrical means inter alia. Suitably, the mixing step is carried out in an extruder.

In one embodiment, unmodified silicate is treated with its modification agent (for example, a quaternary alkylammonium compound as described before) and with the organic compound ii) simultaneously. In a different embodiment, the unmodified silicate is a clay, which is suspended in water or an aqueous liquid, and both the modification agent and the organic compound ii) are added to the suspension.

The organically modified silicate i) is suitably a solid. The organic compound ii) may generally be a solid or a liquid. The organic compound ii) may be liquid as such or being dissolved in an appropriate organic solvent. The organically modified silicate i) and the organic compound ii) may suitably be added to the non-aqueous liquid composition, either simultaneously or subsequently. In one preferred embodiment, the organically modified silicate i) and the organic compound ii) are mixed prior to their addition to the non-aqueous liquid composition. The mixing process can be provided by any mixing equipment known in the state of the art, such as all kind of mills or extruders. In a different embodiment, the organic compound ii) may be premixed with an adsorbing agent, which is different from the organically modified silicate i), prior to the mixture of the organic compound ii) with the organically modified silicate i).

Moreover, the invention relates to the use of the non-aqueous liquid composition for coating an article. Additionally, the invention deals with a process for coating an article comprising the steps of providing an article and applying the non-aqueous liquid composition to the article. The invention also relates to an article coated with the non-aqueous liquid composition according to the invention.

The invention is illustrated further below giving reference to examples. The choice of the respective reaction conditions, as e.g. the reaction temperature, reaction time and dosing rates are known to the skilled person and are illustrated in more detail in the working examples.

Preparation of the organic compound

**Table 1: Raw materials**

| Name | Description | Supplier |
|---|---|---|
| TRIS | 2-Amino-2-hydroxymethyl-1,3-propanediol | Sigma Aldrich |
| Epikote 828 | liquid epoxy resin based on epichlorohydrin and bisphenol A, molecular weight ca. 384 g/mol | Hexion |
| Dowanol DPM | Dipropyleneglycol monomethyl ether | Dow Chemical Company |
| Epikote 1001 | solid epoxy resin based on epichlorohydrin and bisphenol A, molecular weight ca. 1075 g/mol | Hexion |
| Eponex Resin 1510 | Cycloaliphatic Epoxy Resin, molecular weight ca. 420 g/mol | Hexion |
| Jeffamine M-2070 | Polyethermonoamine, PO/EO molar ratio 10/31, molecular weight ca. 2000 g/mol | Huntsman Corp. |

### Synthesis of the organic compounds

Reactions in a glassware reactor were carried out in a standard four-neck round bottom flask with KPG stirrer, nitrogen inlet, reflux condenser and thermosensor.

Pulverization of solid polymer materials was carried out using a Thermomix TM5 (Vorwerk Deutschland Stiftung & Co. KG) as milling device.

### Example S1

94,00 g Butylglycol and 29,10 g (0,2402 mol) TRIS were placed in a glassware reactor and heated up to 140°C under stirring and a stream of N₂. 76,90 g (0,2003 mol) Epikote 828 were added dropwise within 120 min. Stirring continued for 6 h at 140°C. The product was light yellow, transparent and viscous. GPC: Mn= 7292 g/mol; D = 2.12; amine value = 68.1 mg KOH/g

### Example S2

100.00 g Dowanol DPM und 74.11 g (0.1930 mol) Epikote 828 were placed in a glassware reactor and heated up to 100°C under stirring and a stream of N₂. 16.54 g (0.1544 mol) Benzylamine were added dropwise and heated up to 125°C. After 2 h 9.35 g (0.0772 mol) TRIS were added and stirred for 6 h. The product was light yellow, transparent and liquid. GPC: Mn= 6018 g/mol; D = 2.04; amine value = 64.2 mg KOH/g.

### Example S3

94.00 g Dowanol DPM und 69.08 g (0.1799 mol) Epikote 828 were placed in a glassware reactor and heated up to 100°C under stirring and a stream of N₂.19.50 g (0.0720 mol) Oleylamine were added dropwise within 20 min and heated up to 125°C. After 2 h 17.44 g (0.1440 mol) TRIS were added and stirred for 6 h. The product was light yellow, transparent and viscous. GPC: Mn= 7374 g/mol; D = 2.11; amine value = 60.9 mg KOH/g.

### Example S4

94.00 g Dowanol DPM were placed in a glassware reactor and 93.38 g (0.0869 mol) Epikote 1001 were added while heating up to 100°C under stirring and a stream of N₂. 12.62 g (0.1042 mol) TRIS were added and stirring continued for 6 h at 125°C. The product was light yellow, transparent and viscous. GPC: Mn= 8606 g/mol; D = 2.23; amine value = 29.4 mg KOH/g.

### Example S5

94.00 g Dowanol DPM were placed in a glassware reactor and 91.14 g (0.0848 mol) Epikote 1001 were added while heating up to 125°C under stirring and a stream of N₂. 4.60 g (0.0170 mol) Oleylamine were added and the mixture was stirred for 2 h. 10.26 g (0.0847 mol) TRIS were added and stirring continued for 6 h. The product was light yellow, transparent and viscous. GPC: Mn= 8761 g/mol; D = 2.30; amine value = 28.8 mg KOH/g.

### Example S6

94.00 g Dowanol DPM and 76.90 g (0.2003 mol) Epikote 828 were placed in a glassware reactor and heated up to 100°C under stirring and N₂ atmosphere. 29.10 g (0.2402 mol) TRIS were added and stirring continued for 6 h at 125°C. The product was light yellow, transparent and viscous. GPC: Mn= 7868 g/mol; D = 2.02; amine value = 67.9 mg KOH/g

### Example S7

94.00 g Dowanol DPM und 78.48 g (0.2044 mol) Epikote 828 were placed in a glassware reactor and heated up to 100°C under stirring and a stream of N₂. 27.52 g (0.2272 mol) TRIS were added and stirring continued for 6 h at 125°C.

The product was light yellow, transparent and viscous. GPC: Mn= 11056 g/mol; D = 2.30; amine value = 64.5 mg KOH/g

### Example S8

78.94 g Dowanol DPM und 89.02 g (0.2318 mol) Epikote 828 were placed in a glassware reactor and heated up to 125°C under stirring and a stream of N₂. 16.98 g (0.2780 mol) Ethanolamine solved in 15.06 g Dowanol DPM were added dropwise within 45 min. Stirring continued for 6 h at 125°C. The product was brown-yellow, transparent and viscous. GPC: Mn= 7941 g/mol; D = 2.39; amine value = 77.1 mg KOH/g.

### Example S9

88.47 g Dowanol DPM and 78.32 g (0.2040 mol) Epikote 828 were placed in a glassware reactor and heated up to 125°C under stirring and a stream of N₂. 6.24 g (0.1022 mol) Ethanolamine solved in 5.53 g Dowanol DPM were added dropwise and stirred for 2 h. 21.44 g (0.2039 mol) Diethanolamine were added and stirred for 6 h. The product was light yellow, transparent and viscous. GPC: Mn= 1786 g/mol; D = 1.76; amine value = 87.0 mg KOH/g.

### Example S10

84.33 g Dowanol DPM and 85.70 g (0.2232 mol) Epikote 828 were placed in a glassware reactor and heated up to 125°C under stirring and a stream of N₂. 10.90 g (0.1785 mol) Ethanolamine solved in 9.67 g Dowanol DPM were added dropwise and stirred for 2 h. 9.40 g (0.0894 mol) Diethanolamine were added and the mixture was stirred for 6 h. The product was light yellow, transparent and viscous. GPC: Mn= 3966 g/mol; D = 2.40; amine value = 75.8 mg KOH/g.

### Example S11

3523.6 g (3.278 mol) Epikote 1001 and 476.4 g (3.933 mol) TRIS were grinded to an identical particle size und fed to an extruder (Kinheim Expert 16pc, Prism) at 220°C, 100 rpm with 13.5 g/min. Afterwards the product was grinded (Thermomix TM5) for 20 sec at level 10. The product was a light yellow powder (GPC: Mn= 7508 g/mol; D = 2.45). GPC: Mn= 8963 g/mol; D = 2.50; amine value = 56.3 mg KOH/g

### Example S12

94.00 g Dowanol DPM and 78.85 g (0.1875 mol) Eponex Resin 1510 were placed in a glassware reactor at 23°C under stirring and a stream of N₂. 27.25 g (0.2249 mol) TRIS were added and the mixture was heated up to 125°C. Stirring continued for 6 h at 140°C. The product was light yellow, transparent and liquid (GPC: Mn= 3786 g/mol; D = 1.90). GPC: Mn= 3786 g/mol; D = 1.90; amine value = 62.1 mg KOH/g.

### Example S13

28.20 g Dowanol DPM were placed in a glassware reactor and heated up to 100°C under stirring and a stream of N₂. 31.80 g of the reaction product S11 were added in portions during heating until the temperature reached 40°C. At 100°C, stirring continued for 1 h and subsequently, the mixture was heated up to 150°C for 30 min. The product was light yellow, turbid and viscous.

### Evaluation of the organic compounds in application systems

**Table 2: Raw materials**

| Name | Description | Supplier |
|---|---|---|
| Epikote 1001-X-75 | solid epoxy resin from Bisphenol A and epichlorohydrin, 75% in xylene | Hexion Inc. |
| Xylene | isomeric mixture | Overlack AG |
| Dowanol PM | propyleneglycolmethylether | Dow Chemical |
| Disperbyk-142 | solution of a phosphoric ester salt of a high molecular weight copolymer | BYK-Chemie GmbH |
| Byk-A 530 | solution of foam-destroying polymers and polysiloxanes | BYK-Chemie GmbH |
| Bayferrox 130M | ironoxide red pigment | LANXESS Deutschland GmbH |
| Talc 20M2 | multipurpose fine talc/chlorite | Imerys Talc Luzenac France |
| Heucophos ZPA | zinc aluminium orthophosphate hydrate | Heubach GmbH |
| EWO | bariumsulfate | Venator Materials PLC |
| Epikure 3155 | solution of a polyacrylate | Hexion Inc. |
| Garamite 1958 (OMS) | Mixture of two different types of clay, modified with alkyl quaternary ammonium salt having a hydrocarbon chain with at least 10 carbon atoms linked to the ammonium group | BYK-Chemie GmbH |

| | | |
|---|---|---|
| Test system: Solvent based epoxy resin | | |

Production of the solvent based epoxy resin was carried out using the formulation in table 3. After production of component A as described in table 3, 100 g of this component was filled in 150 ml glass bottles. After it was cooled down to room temperature (23°C), 20% of the active substance of the respective liquid organic compound (S1 to S10, S12 to S13) calculated on the amount of OMS became incorporated into the formulation under stirring with a Dispermat CV (Fa. Getzmann) for 2 min. at 1000 rpm, using a 4cm diameter toothed plate. In case of the solid organic compound of Example S11, 20% of the active substance of the compound was incorporated simultaneously with OMS into the formulation for 30 min. under the grinding conditions (50°C, 8500 rpm, 4cm diameter toothed plate) of the production of component A, determined as follows in table 3. Afterwards, the samples were stored at room temperature for 24 hours. Directly before application, component B was added and stirred in with a spatula. For the sag resistance test the samples were applied with a stepped doctor blade Model 421/S (Erichsen GmbH & Co KG) with 50-500 and 550-1000 µm wet film thickness. The application was done on contrast cards 2801 (BYK-Gardner GmbH) using the automatic applicator byko-drive XL (BYK-Gardner GmbH) with an application speed of 50mm/s. Directly after application, the draw down was hanged up vertical at room temperature until it was dried. After drying, the sag resistance was evaluated visually. Therefore, the wet film thickness was chosen that shows after drying a clear separation of the draw down, no runner and also no bulge building between the applied film thickness.

**Table 3: Solvent based epoxy resin**

| **Component A** | |
|---|---|
| Epikote 1001-X-75 | 23.00 g |
| Xylene | 6.00 g |
| Dowanol PM | 5.00 g |
| Disperbyk 142 | 0.90 g |
| Byk-A 530 | 0.50 g |
| Bayferrox 130M | 4.70 g |
| Talc 20M2 | 12.00 g |
| Heucophos ZPA | 20.00 g |
| EWO | 14.00 g |
| OMS | 2.00 g |
| 30 min., 50°C, 8500 RPM., 4cm-diameter toothed plate | |
| Xylene | 8.60 g |
| Dowanol PM | 5.30 g |
| | 102.00 g |
| 2 min., 3000 RPM, 4cm-diameter toothed plate | |
| | |

| Organic compound | |
|---|---|
| 20% of the active substance of the organic compound (S1-S10, S12-S13), calculated on amount of OMS | |
| 2 min., 1000 rpm, 4cm diameter toothed plate | |
| | |

| Component B | |
|---|---|
| Epikure 3155 | 4.60 g |
| *mixing rate comp.A : comp.B* = *102 : 4,6* | |
| Total formulation | 106.60 g |

**Table 4: Results**

| **Application Example** | **Sag resistance [µm]** |
|---|---|
| Control [without OMS and without organic compound ii)] | 50 |
| OMS | 350 |
| S11 | 200 |
| S12 | 200 |
| OMS + S1 | 650 |
| OMS + S2 | 600 |
| OMS + S3 | 800 |
| OMS + S4 | 1000 |
| OMS + S5 | 1000 |
| OMS + S6 | 650 |
| OMS + S7 | 600 |
| OMS + S8 | 750 |
| OMS + S9 | 500 |
| OMS + S10 | 500 |
| OMS + S11 | 650 |
| OMS + S12 | 650 |
| OMS + S13 | 800 |

It was surprisingly found that the inventive application examples provided a highly improved sag resistance compared to the non-inventive application example containing OMS only (OMS without organic compound) as well as the non-inventive application examples containing S11 and S12 only (organic compound S11, S12 without OMS respectively). Moreover, comparing the non-inventive examples with their inventive counterparts (OMS in combination with S11 and S12 respectively), a synergistic effect is showing, caused by the combined application of the organically modified silica and the respective organic compound.

Therefore, the non-inventive comparison examples showed a lower rheological effectiveness measured by sag resistance than the examples according to the present invention. These examples are obviously better suitable to improve the sag resistance than the non-inventive comparison examples.

## Claims

1. A composition comprising
i) an organically modified silicate, and
ii) an organic compound having at least one non-primary amine group and at least three hydroxyl groups, wherein at least two of said hydroxyl groups have an amino group in beta position of the hydroxyl group, and wherein said at least two hydroxyl groups having an amino group in beta position of the hydroxyl group are separated by at least 6 carbon atoms, and wherein at least a part of the hydroxyl groups of the organic compound are secondary hydroxyl groups.

2. The composition according to claim 1, wherein in the organic compound ii) the proportion of primary amine groups is in the range of 0.0 and 8.0 mol-% of the total amount of amine groups.

3. The composition according to claim 1 or 2, wherein the organic compound ii) is the reaction product of at least a compound having at least two epoxide groups and a primary or secondary amine having at least one hydroxyl group.

4. The composition according to any one of the preceding claims, wherein the organically modified silicate is an organically modified clay.

5. The composition according to claim 4, wherein the composition comprises a mixture of at least two different types of clay.

6. The composition according to any one of the preceding claims, wherein component i) is a silicate which has been modified with an organic ammonium salt having one or more hydrocarbon chains linked to the ammonium group having at least 10 carbon atoms per hydrocarbon chain.

7. The composition according to claim 6, wherein the organic ammonium salt is a quaternary ammonium salt.

8. The composition according to any one of the preceding claims, wherein the organic compound ii) is present in an amount of 5 to 100, preferably 10 to 50, % by weight, calculated on the weight of the organically modified silicate.

9. The composition according to any one of the preceding claims, wherein the organic compound ii) has an amine value in the range of 10 to 120 mg KOH/g.

10. The composition according to any one of the preceding claims, wherein the organic compound ii) has a number average molecular weight in the range of 350 to 25000 g/mol.

11. A non-aqueous liquid composition comprising the composition according to any one of the preceding claims.

12. The non-aqueous liquid composition according to claim 11, wherein the composition further comprises an organic resin.

13. The non-aqueous liquid composition according to claim 12, wherein the organic resin is selected from the group of epoxy resins, isocyanate systems, silyl modified polymers and unsaturated polyester resins.

14. The non-aqueous liquid composition according to claim 11, wherein the composition comprises a liquid hydrocarbon or a liquid mixture of hydrocarbons.

15. Use of the composition according to any one of claims 1 to 10 for controlling the rheology of a non-aqueous liquid composition.

16. A process of preparing a composition according to any one of the claims 1 to 10, comprising the steps of
a) providing an organically modified silicate i),
b) providing an organic compound having at least one non-primary amine group and at least three hydroxyl groups, wherein at least two of said hydroxyl groups have an amino group in beta position of the hydroxyl group, and wherein said at least two hydroxyl groups having an amino group in beta position of the hydroxyl group are separated by at least 6 carbon atoms, and wherein at least a part of the hydroxyl groups of the organic compound are secondary hydroxyl groups ii), and
c) mixing components i) and ii).

17. An article coated with the non-aqueous liquid composition according to any one of claims 11 to 14.

## Patentansprüche

1. Zusammensetzung, umfassend
i) ein organisch modifiziertes Silicat und
ii) eine organische Verbindung mit mindestens einer nichtprimären Amingruppe und mindestens drei Hydroxylgruppen, wobei mindestens zwei der Hydroxylgruppen eine Aminogruppe in beta-Position der Hydroxylgruppe aufweisen und wobei die mindestens zwei Hydroxylgruppen, die eine Aminogruppe in beta-Position der Hydroxylgruppe aufweisen, durch mindestens 6 Kohlenstoffatome getrennt sind und wobei es sich bei mindestens einem Teil der Hydroxylgruppen der organischen Verbindung um sekundäre Hydroxylgruppen handelt.

2. Zusammensetzung nach Anspruch 1, wobei in der organischen Verbindung ii) der Anteil von primären Amingruppen im Bereich von 0,0 und 8,0 Mol-% der Gesamtmenge von Amingruppen liegt.

3. Zusammensetzung nach Anspruch 1 oder 2, wobei es sich bei der organischen Verbindung ii) um das Umsetzungsprodukt von mindestens einer Verbindung mit mindestens zwei Epoxidgruppen und einem primären oder sekundären Amin mit mindestens einer Hydroxylgruppe handelt.

4. Zusammensetzung nach einem der vorhergehenden Ansprüche, wobei es sich bei dem organischen modifizierten Silicat um einen organisch modifizierten Ton handelt.

5. Zusammensetzung nach Anspruch 4, wobei die Zusammensetzung eine Mischung von mindestens zwei verschiedenen Typen von Ton umfasst.

6. Zusammensetzung nach einem der vorhergehenden Ansprüche, wobei es sich bei Komponente i) um ein mit einem organischen Ammoniumsalz mit einer oder mehreren an die Ammoniumgruppe gebundenen Kohlenwasserstoffketten mit mindestens 10 Kohlenstoffatomen pro Kohlenwasserstoffkette modifiziertes Silicat handelt.

7. Zusammensetzung nach Anspruch 6, wobei es sich bei dem organischen Ammoniumsalz um ein quartäres Ammoniumsalz handelt.

8. Zusammensetzung nach einem der vorhergehenden Ansprüche, wobei die organische Verbindung ii) in einer Menge von 5 bis 100 und vorzugsweise 10 bis 50 Gew.-%, berechnet auf das Gewicht des organisch modifizierten Silicats, vorliegt.

9. Zusammensetzung nach einem der vorhergehenden Ansprüche, wobei die organische Verbindung ii) eine Aminzahl im Bereich von 10 bis 120 mg KOH/g aufweist.

10. Zusammensetzung nach einem der vorhergehenden Ansprüche, wobei die organische Verbindung ii) ein zahlenmittleres Molekulargewicht im Bereich von 350 bis 25.000 g/mol aufweist.

11. Nichtwässrige flüssige Zusammensetzung, umfassend die Zusammensetzung nach einem der vorhergehenden Ansprüche.

12. Nichtwässrige flüssige Zusammensetzung nach Anspruch 11, wobei die Zusammensetzung ferner ein organisches Harz umfasst.

13. Nichtwässrige flüssige Zusammensetzung nach Anspruch 12, wobei das organische Harz aus der Gruppe der Epoxidharze, Isocyanatsysteme, silylmodifizierten Polymere und ungesättigten Polyesterharze ausgewählt ist.

14. Nichtwässrige flüssige Zusammensetzung nach Anspruch 11, wobei die Zusammensetzung einen flüssigen Kohlenwasserstoff oder eine flüssige Mischung von Kohlenwasserstoffen umfasst.

15. Verwendung der Zusammensetzung nach einem der Ansprüche 1 bis 10 zur Steuerung der Rheologie einer nichtwässrigen flüssigen Zusammensetzung.

16. Verfahren zur Herstellung einer Zusammensetzung nach einem der Ansprüche 1 bis 10, das folgende Schritte umfasst:
a) Bereitstellen eines organisch modifizierten Silicats i),
b) Bereitstellen einer organischen Verbindung mit mindestens einer nichtprimären Amingruppe und mindestens drei Hydroxylgruppen, wobei mindestens zwei der Hydroxylgruppen eine Aminogruppe in beta-Position der Hydroxylgruppe aufweisen und wobei die mindestens zwei Hydroxylgruppen, die eine Aminogruppe in beta-Position der Hydroxylgruppe aufweisen, durch mindestens 6 Kohlenstoffatome getrennt sind und wobei es sich bei mindestens einem Teil der Hydroxylgruppen der organischen Verbindung um sekundäre Hydroxylgruppen ii) handelt, und
c) Mischen der Komponenten i) und ii).

17. Artikel, der mit der nichtwässrigen flüssigen Zusammensetzung nach einem der Ansprüche 11 bis 14 beschichtet ist.

## Revendications

1. Composition comprenant
i) un silicate modifié de manière organique, et
ii) un composé organique ayant au moins un groupe amine non primaire et au moins trois groupes hydroxyle, au moins deux desdits groupes hydroxyle ayant un groupe amino en position bêta du groupe hydroxyle, et lesdits au moins deux groupes hydroxyle ayant un groupe amino en position bêta du groupe hydroxyle étant séparés par au moins 6 atomes de carbone, et au moins une partie des groupes hydroxyle du composé organique étant des groupes hydroxyle secondaire.

2. Composition selon la revendication 1, dans laquelle dans le composé organique ii), la proportion de groupes amine primaire est dans la plage de 0,0 à 8,0 % en moles de la quantité totale de groupes amine.

3. Composition selon la revendication 1 ou 2, le composé organique ii) étant le produit de réaction d'au moins un composé ayant au moins deux groupes époxyde et une amine primaire ou secondaire ayant au moins un groupe hydroxyle.

4. Composition selon l'une quelconque des revendications précédentes, le silicate modifié de manière organique étant une argile modifiée de manière organique.

5. Composition selon la revendication 4, la composition comprenant un mélange d'au moins deux différents types d'argile.

6. Composition selon l'une quelconque des revendications précédentes, le composant i) étant un silicate qui a été modifié avec un sel d'ammonium organique ayant une ou plusieurs chaînes hydrocarbonées liées au groupe ammonium ayant au moins 10 atomes de carbone par chaîne hydrocarbonée.

7. Composition selon la revendication 6, le sel d'ammonium organique étant un sel d'ammonium quaternaire.

8. Composition selon l'une quelconque des revendications précédentes, le composé organique ii) étant présent en une quantité de 5 à 100, préférablement 10 à 50, % en poids, calculée sur le poids du silicate modifié de manière organique.

9. Composition selon l'une quelconque des revendications précédentes, le composé organique ii) ayant un indice d'amine dans la plage de 10 à 120 mg de KOH/g.

10. Composition selon l'une quelconque des revendications précédentes, le composé organique ii) ayant un poids moléculaire moyen en nombre dans la plage de 350 à 25 000 g/mole.

11. Composition liquide non aqueuse comprenant la composition selon l'une quelconque des revendications précédentes.

12. Composition liquide non aqueuse selon la revendication 11, la composition comprenant en outre une résine organique.

13. Composition aqueuse non liquide selon la revendication 12, la résine organique étant choisie dans le groupe composé par des résines époxy, des systèmes d'isocyanate, des polymères modifiés par silyle et des résines de polyester insaturé.

14. Composition liquide non aqueuse selon la revendication 11, la composition comprenant un hydrocarbure liquide ou un mélange liquide d'hydrocarbures.

15. Utilisation de la composition selon l'une quelconque des revendications 1 à 10 pour la régulation de la rhéologie d'une composition liquide non aqueuse.

16. Procédé de préparation d'une composition selon l'une quelconque des revendications 1 à 10, comprenant les étapes de
a) fourniture d'un silicate modifié de manière organique i),
b) fourniture d'un composé organique ayant au moins un groupe amine non primaire et au moins trois groupes hydroxyle, au moins deux desdits groupes hydroxyle ayant un groupe amino en position bêta du groupe hydroxyle, et lesdits au moins deux groupes hydroxyle ayant un groupe amino en position bêta du groupe hydroxyle étant séparés par au moins 6 atomes de carbone, et au moins une partie des groupes hydroxyle du composé organique étant des groupes hydroxyle secondaire ii), et
c) mélange des composants i) et ii).

17. Article revêtu par la composition liquide non aqueuse selon l'une quelconque des revendications 11 à 14.
